# EUROPÄISCHE PATENTSCHRIFT

(11) **EP 4 086 173 B1**
(45) Veröffentlichungstag und Bekanntmachung des Hinweises auf die Patenterteilung: **21.08.2024**
(21) Anmeldenummer: 22171478.5
(22) Anmeldetag: 03.05.2022
(51) Int. Cl.: B64D 9/00, B64D 11/06

(54) **BEFESTIGUNGSVORRICHTUNG ZUR LÖSBAREN VERBINDUNG MIT EINER LOCHSCHIENE EINES FLUGZEUGS UND MONTAGEVERFAHREN**
FASTENING DEVICE FOR DETACHABLE CONNECTION TO A PERFORATED RAIL OF AN AIRCRAFT AND METHOD OF ASSEMBLY
DISPOSITIF DE FIXATION POUR RELIER DE MANIÈRE AMOVIBLE UN RAIL PERFORÉ D'UN AVION ET PROCÉDÉ DE MONTAGE

(30) Priorität: 05.05.2021 DE 102021111609
(43) Veröffentlichungstag der Anmeldung: 09.11.2022
(73) Patentinhaber: Telair International GmbH, 83714 Miesbach (DE)
(72) Erfinder: Patzlsperger, Andreas, 83666 Waakirchen (DE); Lehnert, Wolfgang, 83714 Miesbach (DE)
(74) Vertreter: Meissner Bolte Partnerschaft mbB

(56) Entgegenhaltungen:
- GB-A- 2 267 120
- US-A- 3 995 562
- US-A- 4 230 432
- US-A- 4 776 533
- US-A- 5 169 091
- US-A- 5 178 346
- US-B2- 8 979 450

## Beschreibung

Die Erfindung betrifft eine Befestigungsvorrichtung zu lösbaren Verbindung mit einer Lochschiene eines Flugzeugs sowie ein Montageverfahren für eine solche Befestigungsvorrichtung.

In den Unter-, Haupt- oder Oberdecks von Flugzeugen sind häufig standardisierte Lochschienen mit T-Nut-Anschlüssen zur Befestigung von Sitzen, Frachtsystemkomponenten oder anderen Bauteilen vorgesehen. Diese Lochschienen werden üblicherweise als "Sitzschienen" oder je nach Verwendung als "Seat Track", "Cargo Track" oder "Floor Fitting" bezeichnet. Eine solche Lochschiene weist in Längsrichtung mehrere in einem Rastermaß voneinander beabstandete Schienenlöcher auf, die durch Schienenschlitze miteinander verbunden sind. Das Rastmaß, d.h. der Abstand zwischen zwei typischerweise als Bohrungen ausgeführten Schienenlöchern beträgt gemäß Norm üblicherweise 1 Zoll, kann aber in Ausnahmefällen auch davon abweichen. Häufig wird die Längsrichtung der Lochschiene als X-Richtung, die Querrichtung als Y-Richtung und die dazu senkrechte Richtung als Z-Richtung bezeichnet. Die Lochschienen sind über ein Trägerprofil fest mit dem Flugzeugrumpf verbunden.

Eine solche Lochschiene ist beispielsweise in den Figuren 1 und 2 in EP 0 581 072 A1 gezeigt.

Außer für die Befestigung von Passagiersitzen werden Loch- bzw. Sitzschienen auch auf Frachtdecks von Flugzeugen zur Befestigung von Frachtgut verwendet. Zur Befestigung von Containern und Paletten für Frachtstücke werden Befestigungsvorrichtungen, wie z.B. Riegel, Seitenführungen, usw. auf dem Frachtdeck lösbar an den Lochschienen montiert, um Container und Paletten während des Transports in Position zu halten.

Durch die vorgegebenen Normmaße der Lochschiene ist der zur Verfügung stehende Bauraum für Befestigungsvorrichtung in der XY-Ebene häufig vorgegeben. Aber auch in Z-Richtung kann die maximale Bauhöhe für eine Befestigungsvorrichtung begrenzt sein, beispielsweise wenn Container und Paletten auf Rollen ungehindert über eine montierte Befestigungsvorrichtung hinweg auf dem Frachtdeck bewegbar sein müssen. Für bestimmte Anwendungen ist eine maximale Bauhöhe von 2 Zoll vorgegeben.

Es gibt verschiedene Möglichkeiten, um eine Befestigungsvorrichtung mit einer Lochschiene zu verbinden. Dabei können zwei grundsätzlich verschiedene Montage- bzw. Verriegelungsprinzipien unterschieden werden.

Beim ersten Verriegelungsprinzip weist die Befestigungsvorrichtung drehbare Zugbolzen (Z-Bolzen) und unbewegliche Scherbolzen (XY-Bolzen) auf. Die Befestigungsvorrichtung wird von oben in die Sitzschiene eingesetzt, so dass die Scherbolzen bereits im Eingriff mit den Schienenlöchern und somit auf der vorgesehenen Verriegelungsposition zur Blockierung einer XY-Bewegung sind. Dann wird die Befestigungsvorrichtung durch Verdrehen des Zugbolzens um 90° in Z-Richtung in der Verriegelungsposition gesichert. Für sicherheitsrelevante Anwendungen ist durch eine geeignete vibrationsresistente Arretierung ein Zurückdrehen des Zugbolzens zwingend durch einen Formschluss zu vermeiden. Hierfür sind zusätzliche Bauteile notwendig, wie zum Beispiel federbelastete Sicherungselemente. Häufig ist dafür zusätzlicher Bauraum nötig. Außerdem entstehen zusätzliche Kosten.

Eine nach diesem Verriegelungsprinzip funktionierende Befestigungsvorrichtung ist beispielsweise aus DE 4216413 A1 bekannt.

Beim zweiten Verriegelungsprinzip ist die Befestigungsvorrichtung mit unbeweglichen Zugbolzen (Z-Bolzen) ausgestattet. Die Scherbolzen (XY-Bolzen) sind vertikal beweglich und befinden sich vor der Montage in einer oberen Endposition. Die Befestigungsvorrichtung wird von oben in die Sitzschienen eingesetzt, so dass die Zugbolzen in die Schienenlöcher der Sitzschiene eintauchen. Dann wird die Befestigungsvorrichtung um einen halben Lochabstand in (horizontaler) Längsrichtung der Lochschiene in die Verriegelungsposition verschoben, üblicherweise um ½ Zoll. Dabei kommt der Verriegelungskopf des Zugbolzens in Eingriff mit den Profilkanten (Z-Lippe) der Schlitze der Sitzschiene, um die Befestigungsvorrichtung in Z-Richtung zu sichern. Durch vertikale Bewegung der Scherbolzen in die untere Endposition und Arretieren der Scherbolzen wird eine Sicherung in der XY-Ebene erreicht.

Eine nach diesem Verriegelungsprinzip funktionierende Befestigungsvorrichtung ist aus WO 2010/149178 A1 bekannt, wobei die Scherbolzen durch einschraubbare Fixierungszapfen umgesetzt sind. Die Verriegelung in Z-Richtung wird durch einteilig mit dem Gehäuse ausgeführte Fortsätze einer Befestigungsschiene gewährleistet.

US 5 169 091 A und US 5 178 346 A offenbaren jeweils eine Schienenbefestigungsvorrichtung, die ein Schienenbefestigungsgehäuse einschließlich Mitteln zur Befestigung an einem Sitz oder einer Frachtvorrichtung umfasst. Das Schienenbefestigungsgehäuse hat eine Oberseite und eine Unterseite mit ersten und zweiten beabstandeten Verriegelungsbolzen an der Unterseite.

US 4 230 432 A und US 4 776 533 A offenbaren jeweils eine Schienenbefestigungsvorrichtung mit einem Gehäuse und zwei Schienenbolzen, die an der Unterseite des Gehäuses befestigt sind.

Andere Lösungen als die Verwendung von Schraubbolzen zur axialen Verschiebung des Scherbolzens haben typischerweise den Nachteil, dass zusätzliche Bauteile erforderlich sind und mehr Bauraum, insbesondere eine größere Bauhöhe, benötigt wird.

Aus Gründen der Gewichtsersparnis wird das Gehäuse der Befestigungsvorrichtung üblicherweise aus Aluminium gefertigt. Die Durchmesser der Scherbolzen und Zugbolzen müssen in Abhängigkeit der auftretenden Lasten ausreichend groß ausgelegt sein. Gleichzeitig muss das Aluminiumgehäuse für eine ausreichende Festigkeit eine entsprechend große Materialstärke haben. Zugbolzen und Scherbolzen aus Aluminium sind nur für relativ niedrige Lasten einsetzbar. Für Anwendungen in denen hohe Lasten auf die Befestigungsvorrichtung wirken, sind für die Verriegelung in Z-Richtung manchmal Zugbolzen aus Stahl vorgesehen, die in das Gehäuse eingeschraubt sind.

Wenn ein Scherbolzen in das Gehäuse der Befestigungsvorrichtung eingeschraubt wird, muss für den Scherbolzen eine Gehäuseausnehmung mit einem Kreisquerschnitt vorgesehen sein, der (mindestens) dem Durchmesser des Scherbolzens entspricht. Durch das Rastermaß der Lochschiene ist die maximal verbleibende Materialdicke des Gehäuses zwischen einer Gehäuseausnehmung für einen eingeschraubten Zugbolzen und der Gehäuseausnehmung für den Scherbolzen beschränkt. Bei dieser Lösung können keine geschraubten Zugbolzen aus Stahl eingesetzt werden, da die verbleibende Materialstärke für das Einschrauben des Stahlbolzens in das Aluminiumgehäuse zu wenig Material zur Verfügung steht. Dadurch ist die zulässige Maximallast für die Befestigungsvorrichtung beschränkt. Ausgehend von diesem Stand der Technik stellt sich die vorliegende Erfindung die Aufgabe, eine Befestigungsvorrichtung zur lösbaren Verbindung mit einer Lochschiene eines Flugzeugs bereitzustellen, die möglichst hohe Lasten übertragen kann und gleichzeitig einen möglichst geringen Platzbedarf, insbesondere eine möglichst geringe Bauhöhe, hat. Des Weiteren soll die Befestigungsvorrichtung konstruktiv möglichst einfach und für sicherheitsrelevante Anwendungen geeignet sein. Außerdem soll ein Montageverfahren zur lösbaren Verbindung einer solchen Befestigungsvorrichtung mit einer Lochschiene eines Flugzeugs vorgeschlagen werden.

Diese Aufgabe wird gelöst durch eine Befestigungsvorrichtung nach Anspruch 1 und durch ein Montageverfahren nach Anspruch 15.

Die Aufgabe wird gelöst durch eine Befestigungsvorrichtung zur lösbaren Verbindung mit einer Lochschiene, vorzugsweise Sitzschiene, eines Flugzeugs, wobei die Lochschiene in Längsrichtung in einem Rastermaß voneinander beabstandete Schienenlöcher aufweist, die durch Schienenschlitze miteinander verbunden sind, wobei die Befestigungsvorrichtung umfasst:
- ein Gehäuse aus Aluminium,
- mindestens einen fest mit dem Gehäuse verbundenen Verriegelungskopfabschnitt, wobei der Verriegelungskopfabschnitt in ein Schienenloch der Lochschiene einführbar und entlang der Längsrichtung der Lochschiene in eine Verriegelungsposition verschiebbar ist, in der der Verriegelungskopfabschnitt mit einem Schlitzabschnitt der Lochschiene, in dem sich ein Schienenschlitz erstreckt, im Eingriff ist und wobei der Verriegelungskopfabschnitt ein Abschnitt eines im Gehäuse befestigten Verriegelungsbolzens aus Stahl ist;
- mindestens einen Scherzapfen, der unverdrehbar und axial verschieblich relativ zum Gehäuse im Gehäuse geführt ist, wobei ein zum Verriegelungskopfabschnitt ausgerichteter Außenkonturabschnitt des Querschnitts des Scherzapfens nach innen gekrümmt geformt ist und wobei der Scherzapfen in einer Verriegelungsposition der Befestigungsvorrichtung durch axiale Verschiebung mit einem Schienenloch der Lochschiene in Eingriff bringbar ist;
- einen Betätigungsbolzen, der derart relativ zum Gehäuse drehbar angeordnet und mit dem Scherzapfen verbunden ist, dass eine Verdrehung des Betätigungsbolzens eine axiale Verschiebung des Scherzapfens relativ zum Gehäuse bewirkt.

Die Idee der Erfindung ist es, durch einen relativ zum Gehäuse drehbar angeordneten Betätigungsbolzen zum einen den Platzbedarf der Befestigungsvorrichtung so gering wie möglich zu halten. Durch einen relativ zum Gehäuse unverdrehbaren Scherzapfen, der aber axial relativ zum Gehäuse verschieblich ist, ist die rotatorische Position des Scherzapfens (um seine Längsachse) festgelegt. Dadurch kann der Querschnitt des Scherzapfens von einem Kreisquerschnitt - der bei Verdrehbarkeit des Scherzapfens im Gehäuse zwingend erforderlich wäre - abweichen und in Abhängigkeit der strukturmechanischen Festigkeitserfordernisse geeignet gestaltet werden. Dadurch kann eine Befestigungsvorrichtung so konstruiert werden, dass sie zum einen möglichst hohe Lasten übertragen kann und zum anderen einen möglichst geringen Platzbedarf, insbesondere eine geringe Bauhöhe, hat.

Die Befestigungsvorrichtung funktioniert insbesondere nach dem eingangs beschriebenen zweiten Verriegelungsprinzip, d.h. vorzugsweise aufgrund einer Verschiebung der Befestigungsvorrichtung in Längsrichtung der Lochschiene um ein halbes Rastermaß in eine Verriegelungsposition. Der Scherzapfen wird insbesondere entlang seiner Längsrichtung verschoben, d.h. im montierten Zustand der Befestigungsvorrichtung senkrecht (in Z-Richtung) zur Lochschiene. Der Scherzapfen dient insbesondere zur Blockierung einer Relativbewegung zwischen der Befestigungsvorrichtung und der Lochschiene in Längsrichtung (X-Richtung) und Querrichtung (Y-Richtung) der Lochschiene, während der Verriegelungskopfabschnitt insbesondere zur Blockierung der Relativbewegung senkrecht zur Lochschiene (Z-Richtung) dient.

Der Scherzapfen ist insbesondere formschlüssig gegen Verdrehung im Gehäuse gesichert. Ein Scherzapfen kann einen nicht-rotationssymmetrischen Querschnitt haben und in einer korrespondierend geformten Führungsausnehmung des Gehäuses axial geführt sein. Der Verriegelungskopfabschnitt kann einteilig mit dem Gehäuse (aus Aluminium) oder als Teil eines Verriegelungsbolzens (Zugbolzens) als separates Bauteil (z.B. aus Stahl) ausgeführt sein.

Die drehbare Anordnung des Betätigungsbolzens relativ zum Gehäuse und die Verbindung des Betätigungsbolzens mit dem Scherzapfen wird insbesondere durch einen Mechanismus zur Umwandlung einer Drehbewegung des Betätigungsbolzens in eine Axialbewegung des Scherzapfens umgesetzt. Ein solcher Mechanismus kann ein eingängiges oder mehrgängiges Gewinde oder eine (spiralförmige) Kulissenführung umfassen. Der Betätigungsbolzen könnte über ein Gewinde drehbar im Gehäuse (axial zum Gehäuse verschieblich) angeordnet sein, wobei der Betätigungsbolzen axial unverschieblich, aber drehbar mit dem Scherzapfen verbunden ist. Alternativ könnte der Betätigungsbolzen relativ zum Gehäuse drehbar und axial unverschieblich angeordnet sein, wobei der Betätigungsbolzen über ein Gewinde mit dem Scherzapfen verbunden wäre. Ein drehbarer Betätigungsbolzen ermöglicht eine axiale Verschiebung des Scherzapfens mit einfachen konstruktiven Mitteln. Auf zusätzliche, vor allem komplexe, Bauteile für einen Verschiebemechanismus eines aus dem Stand der Technik bekannten Scherbolzens wie Druckfedern, Schnellverschluss-Muttern oder Kipphebel kann verzichtet werden.

Eine Lochschiene (Sitzschiene) kann eine Vielzahl von Schienenlöchern (Bohrungen) oder eine relativ kurze Reihe von (einigen) Schienenlöchern umfassen, beispielsweise zwei bis sechs Schienenlöcher. Auch ein in einem Frachtdeck vorgesehenes sog. Fitting mit Schienenlöchern und Schienenschlitzen kann als eine (kurze) Lochschiene verstanden werden.

In einer Ausführungsform ist der Scherzapfen in einer Führungsausnehmung des Gehäuses aufgenommen, wobei ein Innenkonturabschnitt der Führungsausnehmung, an die Form eines Außenkonturabschnitts des Scherzapfens angepasst ist. Der Innenflächenabschnitt dient insbesondere zur axialen Führung des Scherzapfens. Dadurch kann durch eine geeignete Formgebung der Außenkontur (des Querschnitts) des Scherzapfens das Gehäuse durch eine entsprechend angepasste Gestaltung der Führungsausnehmung nach strukturmechanischen Kriterien optimiert werden, insbesondere im Hinblick auf die Festigkeit.

In einer Ausführungsform weist der Querschnitt des Scherzapfens in mindestens einem ersten Außenkonturabschnitt eine erste Querschnittsabmessung und in mindestens einem zweiten Außenkonturabschnitt eine zweite, kleinere Querschnittsabmessung auf, wobei der zweite Außenkonturabschnitt zum Verriegelungskopfabschnitt ausgerichtet ist. Der Querschnitt des Scherzapfens kann beispielsweise rechteckig sein oder eine zum Verriegelungskopfabschnitt hin geöffnete Nut aufweisen. Insbesondere weist der Scherzapfen in dem zum Verriegelungskopfabschnitt hin ausgerichteten Umfangsabschnitt eine Querschnittsreduktion gegenüber der äußeren Umfangskontur des Scherzapfens auf. Die kleinere Querschnittsabmessung kann durch eine einseitige oder beidseitige Ausfräsung des Scherzapfens gefertigt sein. Der Querschnitt des Scherzapfens kann nierenförmig sein. Durch eine abschnittsweise Verkleinerung des Querschnitts (Reduktion des Radius) kann zum einen ein nicht-rotationssymmetrischer Querschnitt geschaffen werden, der eine Verdrehung des Scherzapfens im Gehäuse verhindert. Zum anderen kann das Gehäuse im Bereich der Querschnittsverkleinerung des Scherzapfens durch eine entsprechende Verbreiterung des Gehäuses (Verstärkung einer Gehäusewand) mit größerer Materialstärke ausgeführt werden, wodurch die Festigkeit erhöht wird.

In einer Ausführungsform ist der zweite Außenkonturabschnitt des Querschnitts des Scherzapfens, vorzugsweise kreisbogenförmig, nach innen gekrümmt geformt, wobei insbesondere der erste Außenkonturabschnitt des Querschnitts des Scherzapfens, vorzugsweise kreisbogenförmig, nach außen gekrümmt geformt ist. Insbesondere ist ein erster Außenkonturabschnitt konkav und ein zweiter Außenkonturabschnitt konvex ausgeführt. Durch eine nach innen gekrümmte Umfangsfläche des Scherzapfens kann die Außenfläche des Gehäuses in diesem Bereich nach außen gekrümmt gestaltet werden. Das Gehäuse kann dadurch im Bereich der Längsachse des Verriegelungskopfabschnitts mehr Material aufweisen, d. h. mit größerer Wandstärke ausgeführt werden. Dadurch wird die mechanische Festigkeit des Gehäuses speziell in diesem Bereich erhöht.

Der Verriegelungsbolzen ist vorzugsweise entlang eines Gewindeabschnitts in das Gehäuse eingeschraubt. Insbesondere für sicherheitsrelevante Anwendungen kann ein als Schraubbolzen ausgeführter Verriegelungsbolzen mit definiertem Anzugsdrehmoment montiert werden. Außerdem kann das Gewinde zwischen dem Gehäuse und dem Gewindeabschnitt des Verriegelungsbolzens durch eine (zugelassene) Gewindebeschichtung gesichert sein, um zusätzliche Sicherheit gegen ein zurückdrehen zu gewährleisten. Durch einen in ein Aluminiumgehäuse eingeschraubten Verriegelungsbolzen aus einem festeren Material, wie vorzugsweise Stahl, kann die mechanische Belastbarkeit der Befestigungsvorrichtung, insbesondere hinsichtlich der übertragbaren Zugkräfte, erhöht werden.

In einer Ausführungsform sind ein zum Verriegelungskopfabschnitt ausgerichteter Außenkonturabschnitt des Querschnitts des Scherzapfens und eine Außenkontur des Verriegelungskopfabschnitts, insbesondere eine Außenkontur des Gewindeabschnitts des Verriegelungsbolzens, konzentrisch zueinander ausgebildet. Dadurch kann der Gehäusewandbereich zwischen dem Scherzapfen und dem Gewindeabschnitt des Verriegelungsbolzens genau in dem Bereich mit größerer Wandstärke ausgeführt werden, in dem eine mechanische Belastung durch das Einschrauben des Verriegelungsbolzens in das Gehäuse besonders hoch ist.

In einer Ausführungsform ist der Betätigungsbolzen über ein Gewinde drehbar in einer Durchgangsbohrung des Gehäuses aufgenommen. Der Betätigungsbolzen ist insbesondere als Schraubbolzen ausgeführt.

In einer Ausführungsform ist der Betätigungsbolzen in axialer Richtung, vorzugsweise formschlüssig, fest mit dem Scherzapfen verbunden, wobei der Betätigungsbolzen und der Scherzapfen insbesondere durch ein Sicherungselement, vorzugsweise einen Sicherungsstift oder einen Sicherungsring, gegen axiale Relativverschiebung gesichert sind. Der Betätigungsbolzen kann mindestens eine Umfangsnut aufweisen, in die (jeweils) ein Sicherungsring eingesetzt ist. Durch eine feste axiale Verbindung (entlang einer gemeinsamen Längsachse) des Betätigungsbolzens und des Scherzapfens, folgt der Scherzapfen der axialen Verschiebung des Betätigungsbolzens in beide Richtungen, wobei der Scherzapfen selbst unverdrehbar im Gehäuse geführt ist.

In einer Ausführungsform weist der Betätigungsbolzen eine Umfangsnut und der Scherzapfen mindestens eine Querbohrung auf, wobei ein Sicherungselement, vorzugsweise ein Sicherungsstift, in die Umfangsnut und in die Querbohrung eingreift. Der Scherzapfen kann an beiden Seiten Querbohrung in aufweisen, wobei jeweils ein Sicherungsstift in die Querbohrung eingesetzt sein kann. Eine axiale Sicherung durch einen Sicherungsstift gewährleistet die Verdrehbarkeit des Betätigungsbolzens relativ zum Scherzapfen und gleichzeitig die axiale Sicherung des Scherzapfens auf fertigungstechnisch einfache Weise.

In einer Ausführungsform bildet eine Gehäuseoberfläche des Gehäuses, eine erste axiale Anschlagsfläche für eine obere Stirnfläche des Scherzapfens aus, wobei ein Kontakt der ersten axialen Anschlagsfläche und der oberen Stirnfläche eine obere axiale Endstellung des Scherzapfens definieren. Die erste axiale Anschlagsfläche ist insbesondere an einer Innenseite der Führungsausnehmung vorgesehen.

In einer Ausführungsform weist der Betätigungsbolzen einen Kopfabschnitt mit einem Mitnahmeprofil zur Verdrehung des Betätigungsbolzens auf. Das Mitnahmeprofil kann beispielsweise ein Innensechskantprofil sein. Ein Kopfabschnitt mit Mitnahmeprofil ist platzsparend benötigt nur eine geringe Bauhöhe.

In einer Ausführungsform bildet eine Gehäuseaußenfläche des Gehäuses eine zweite axiale Anschlagsfläche für eine untere Auflagefläche des Kopfabschnitts des Betätigungsbolzens aus, wobei ein Kontakt der zweiten axialen Anschlagsfläche und der unteren Auflagefläche eine untere axiale Endstellung des Scherzapfens definieren. Die (ringförmige) obere Stirnfläche des Scherzapfens kann durch einen axialen (ringförmigen) Vorsprung des Scherzapfens ausgebildet sein, der bündig mit der Außenumfangsfläche des Scherzapfens abschließt (oder ein Abschnitt der Außenumfangsfläche des Scherzapfens ist). Dadurch wird die Umfangskontaktfläche zur Übertragung von in den Scherzapfen eingeleiteten Scherkräften in das Gehäuse vergrößert.

In einer Ausführungsform ist ein Gewindeabschnitt des Betätigungsbolzens in einer unteren axialen Endstellung des Scherzapfens mit dem Gewinde des Gehäuses in Eingriff und in einer oberen axialen Endstellung des Scherzapfens nicht im Eingriff mit dem Gewinde des Gehäuses. Der Gewindeabschnitt des Betätigungsbolzens weist insbesondere ein Außengewinde auf, wobei eine Durchgangsbohrung des Gehäuses ein Innengewinde aufweist. Die Länge des Gewindeabschnitts des Betätigungsbolzens ist insbesondere so bemessen, dass der Gewindeabschnitt in der oberen axialen Endstellung des Scherzapfens außer Eingriff mit dem Gehäuse kommt. Dadurch kann eine unbeabsichtigte (axiale) Überlastung oder Überwindung der axialen Sicherung zwischen dem Scherzapfen und dem Betätigungsbolzen, insbesondere durch ein Sicherungselement, verhindert werden.

In einer Ausführungsform ist beidseitig des Verriegelungskopfabschnitts jeweils ein Scherzapfen vorgesehen, wobei die Längsachsen der beiden Schwerzapfen um ein Rastmaß der Lochschiene voneinander beabstandet sind. Durch zwei Scherzapfen kann eine Verdrehung der Befestigungsvorrichtung um die Längsachse des Verriegelungskopfabschnitts (Z-Richtung) verhindert werden. Dadurch wird eine Schwerbelastung des Verriegelungsbolzens verhindert oder zumindest reduziert.

In einer Ausführungsform ist mindestens ein Befestigungsklappelement, insbesondere zur Fixierung von Frachtcontainern und/oder Frachtpaletten auf einem Frachtdeck eines Flugzeugs, auf- und abklappbar am Gehäuse befestigt, wobei der Betätigungsbolzen in einer abgeklappten Stellung des Befestigungsklappelements zumindest teilweise unterhalb des Befestigungsklappelements positioniert ist. Insbesondere kann in einer aufgeklappten Stellung des Befestigungsklappelements der Betätigungsbolzen verdreht werden. Die geringe Bauhöhe aufgrund der Verwendung eines drehbaren Betätigungsbolzens kann das Befestigungsklappelement vollständig abgeklappt werden. Dadurch kann vorzugsweise eine vorgegebene maximale Bauhöhe für die Befestigungsvorrichtung, von beispielsweise 2 Zoll, eingehalten werden.

Außerdem wird die Aufgabe insbesondere gelöst durch ein Montageverfahren zur lösbaren Verbindung einer erfindungsgemäßen Befestigungsvorrichtung mit einer Lochschiene, vorzugsweise Sitzschiene, eines Flugzeugs, wobei die Lochschiene in Längsrichtung in einem Rastermaß voneinander beabstandete Schienenlöcher aufweist, die durch Schienenschlitze miteinander verbunden sind, wobei das Montageverfahren folgende Schritte umfasst:
- Einführen des Verriegelungskopfabschnitts der Befestigungsvorrichtung in ein Schienenloch der Lochschiene;
- Verschieben der Befestigungsvorrichtung um ein halbes Rastermaß entlang der Längsrichtung der Lochschiene in eine Verriegelungsposition, in der der Verriegelungskopfabschnitt mit einem Schlitzabschnitt der Lochschiene im Eingriff ist;
- Verdrehen des Betätigungsbolzens relativ zum Gehäuse, vorzugsweise durch Eingreifen eines passenden Werkzeugs in ein Mitnahmeprofil des Betätigungsbolzens, um den Scherzapfen axial in eine untere axiale Endposition zu bewegen, in der der Scherzapfen in ein Schienenloch der Lochschiene eingreift.

Das Montageverfahren hat ähnliche Vorteile wie die erfindungsgemäße Befestigungsvorrichtung. Das Verfahren kann einige oder alle verfahrenstechnischen Merkmale umsetzen, die im Zusammenhang mit der Befestigungsvorrichtung beschrieben sind.

Ausführungsbeispiele der Erfindung werden nachfolgend anhand der Zeichnungen näher erläutert. Hierbei zeigen:
- Figur 1: eine schematische Darstellung einer Ausführungsform einer erfindungsgemäßen Befestigungsvorrichtung in einer seitlichen Schnittdarstellung;
- Figur 2: die Ausführungsform nach Figur 1 in einer perspektivischen Teildarstellung;
- Figur 3a: die Ausführungsform nach Figur 1 in perspektivischer Draufsicht;
- Figur 3b: die Ausführungsform nach Figur 1 in perspektivischer Unteransicht;
- Figur 4: die Ausführungsform nach Figur 1 in einer Unteransicht;
- Figur 5: eine schematische Darstellung einer ersten Ausführungsform einer erfindungsgemäßen Befestigungsvorrichtung mit einem Befestigungsklappelement in einer seitlichen Schnittdarstellung;
- Figur 6a: eine schematische Darstellung einer zweiten Ausführungsform einer erfindungsgemäßen Befestigungsvorrichtung mit einem Befestigungsklappelement in einer perspektivischen Ansicht;
- Figur 6b: die Ausführungsform nach Figur 6A in einer seitlichen Schnittansicht entlang der Linie A-A;
- Figur 7a: eine schematische Darstellung einer üblichen Lochschiene in einer perspektivischen Ansicht;
- Figur 7b: eine schematische Darstellung eines Abschnitts einer üblichen Lochschiene in einer Draufsicht.

In der nachfolgenden Beschreibung der Erfindung werden für gleiche und gleich wirkende Elemente dieselben Bezugszeichen verwendet.

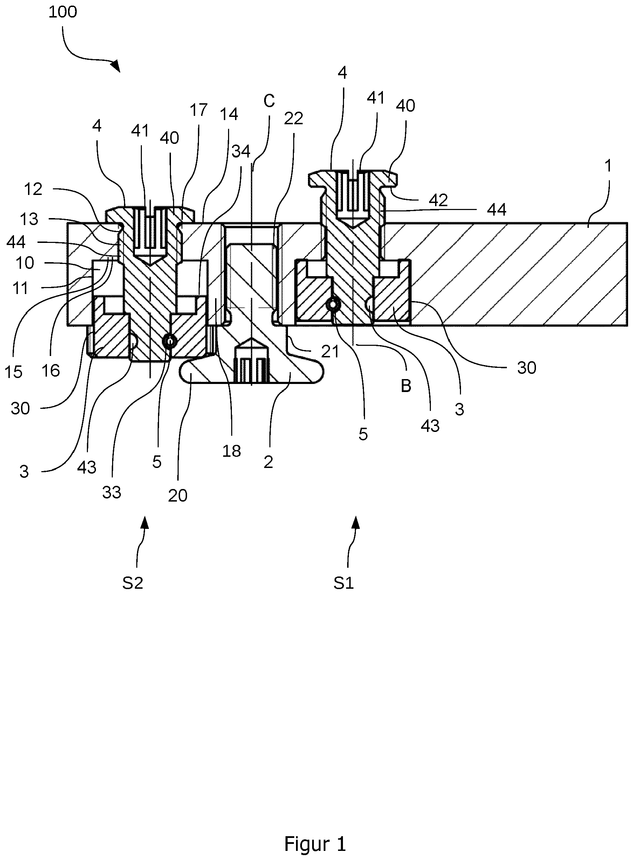

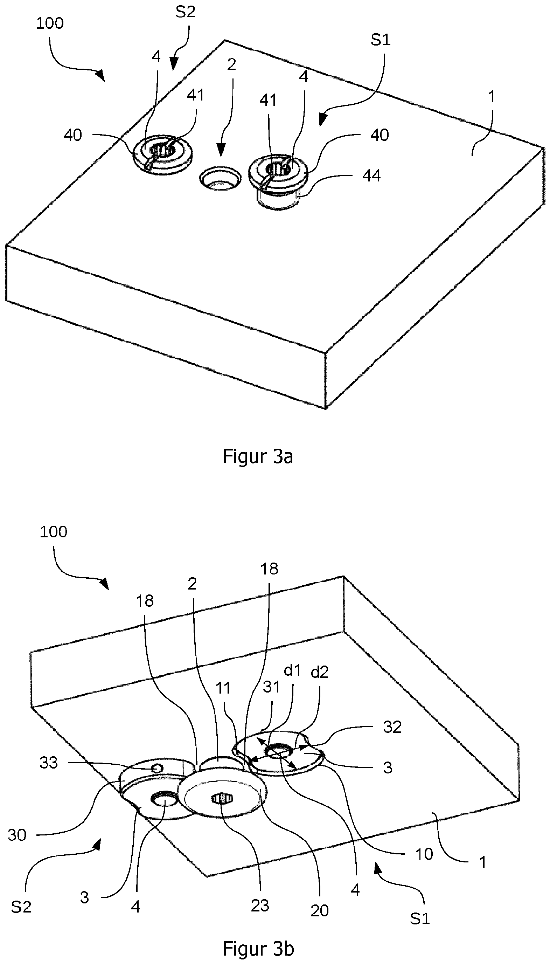

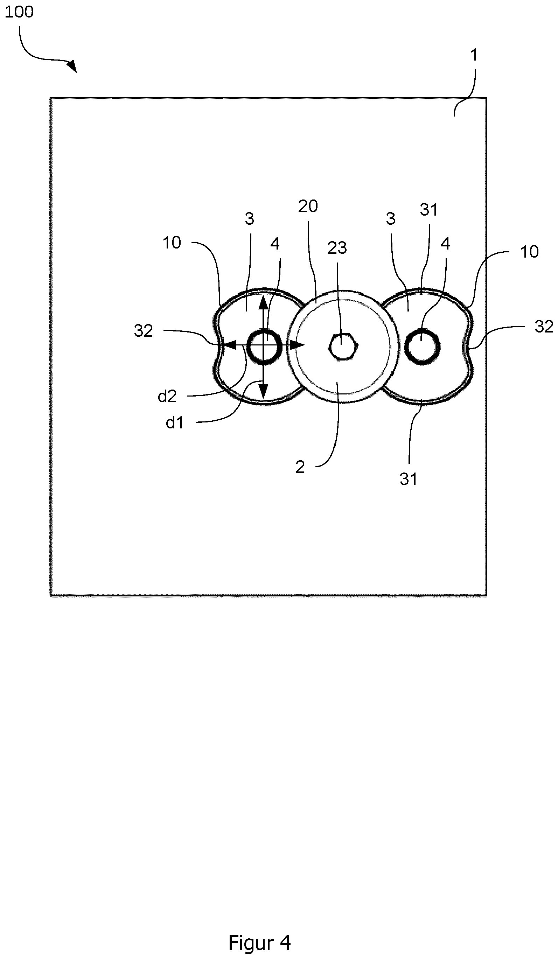

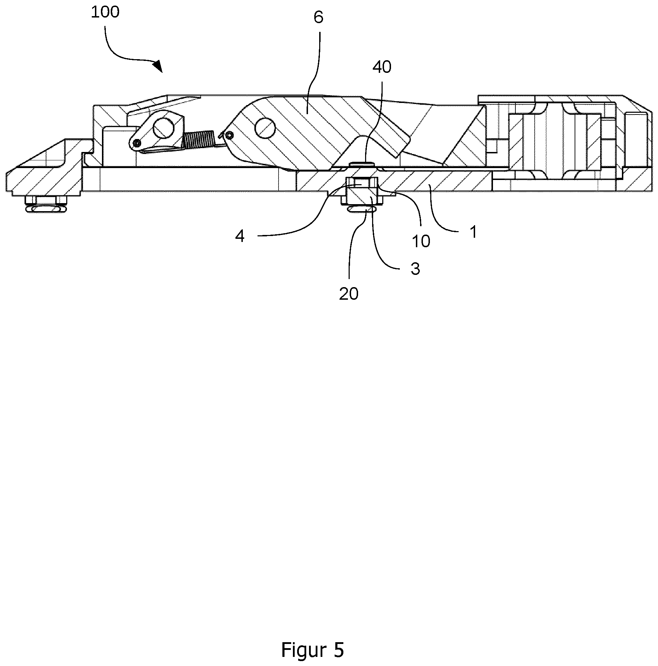

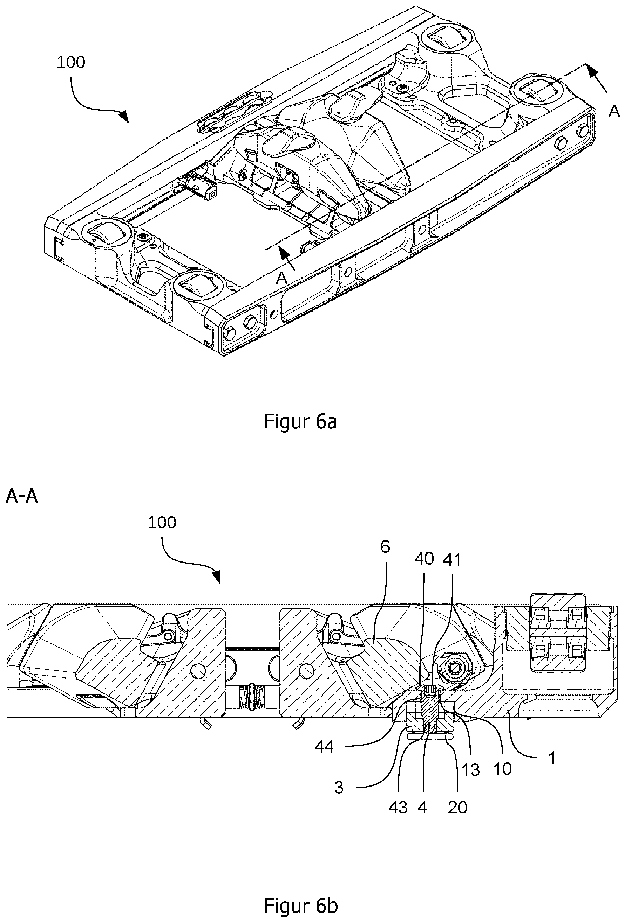

Die Figuren 1 bis 5 zeigen eine erste Ausführungsform einer erfindungsgemäßen Befestigungsvorrichtung 100 zur lösbaren Verbindung mit einer Lochschiene 200. Weitere Ausführungsformen sind in den Figuren 5 sowie 6a und 6b gezeigt.

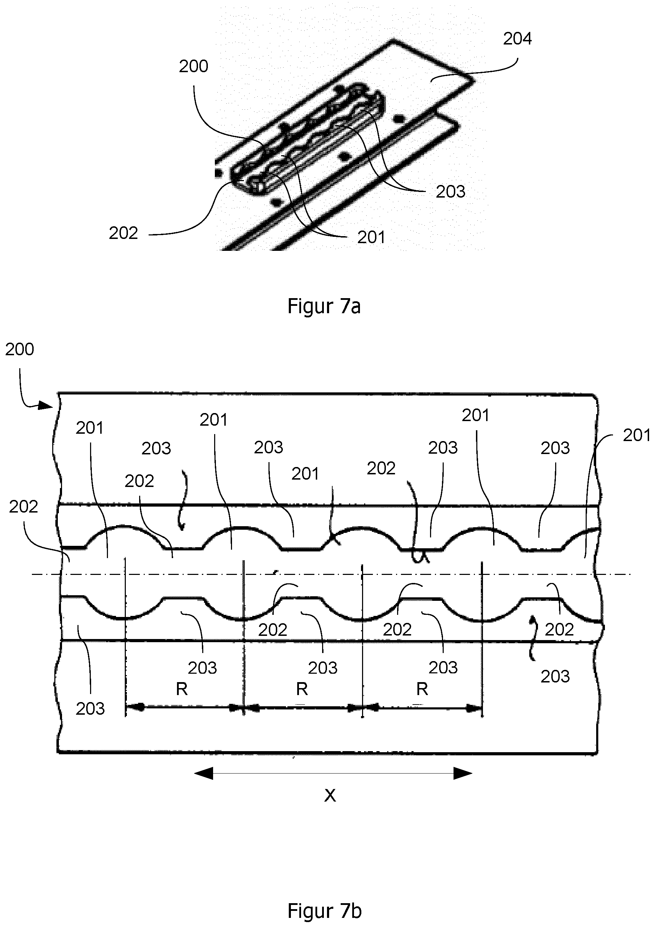

Eine aus dem Stand der Technik bekannte Lochschiene 200 ist in den Figuren 7a und 7b schematisch dargestellt. Solche Lochschienen 200 werden in Flugzeugen zum Befestigen von Passagiersitzen und Frachtgut mittels Befestigungsvorrichtungen genutzt. Auf einem Trägerprofil 204, das mit dem Flugzeugrumpf verbunden ist, ist eine Lochschiene 200 mit einem genormten T-Nut-Profil fest angebracht. Die Lochschiene 200 weist in der Längsrichtung X in dem Rastermaß R, typischerweise 1 Zoll, mehrere voneinander beabstandete Schienenlöcher 201 auf, die durch Schienenschlitze 202 miteinander verbunden sind. Zwischen den Schienenlöchern 201 bilden die Schlitzabschnitte 203 zur Mitte des Schienenprofils hin vorstehende Profilkanten aus.

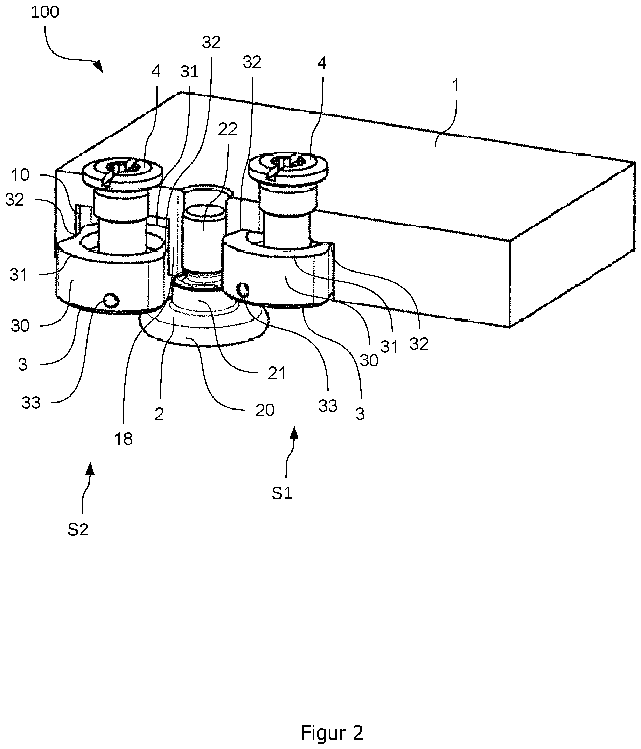

Die in den Figuren 1-5 dargestellte Ausführungsform der Befestigungsvorrichtung 100 hat ein Gehäuse 1 aus Aluminium, in das ein Verriegelungsbolzen 2 aus Stahl mit einem Verriegelungskopfabschnitt 20 eingeschraubt ist. Hierfür weist der Verriegelungsbolzen 2 ein Mitnahmeprofil 23, hier ein Innensechkantprofil, und einen sich entlang der Längsachse C erstreckenden Gewindeabschnitt 22 mit einem Außengewinde auf. Der Durchmesser des Verriegelungskopfabschnitts 20 ist kleiner als der Durchmesser eines Schienenloch 201, jedoch ausreichend groß, um die Profilkanten eines Schlitzabschnitts 203 der Lochschiene 200 in der Verriegelungsposition P formschlüssig zu hintergreifen. Der Scherzapfen 3 ist in einer Führungsausnehmung 10 des Gehäuses 1 axial, d.h. entlang seiner Längsachse B, entlang der Außenumfangsfläche 30 verschieblich geführt. Der Scherzapfen 3 ist vorzugsweise aus Aluminium und hat eine zylindrische Grundform mit nicht-rotationssymmetrischem Querschnitt (siehe Figuren 2, 3b und 4), hier eine Kreisform mit beidseitigen Ausfräsungen. Dadurch, dass der Innenkonturabschnitt 11 der Führungsausnehmung 10 an die Form der Außenkonturabschnitt der 31,32 des Scherzapfens 3 angepasst ist, kann sich der Scherzapfen 3 im Gehäuse 1 nicht verdrehen. Der Betätigungsbolzen 4 hat einen Gewindeabschnitt 44, der mit einem in der Durchgangsbohrung 12 ausgeführten Gewinde 13 des Gehäuses 1 eingreift. Der Betätigungsbolzen 4 ist drehbar im Gehäuse 1 angeordnet und mit dem Scherzapfen 3 so verbunden, dass eine Verdrehung des Betätigungsbolzens 4 eine axiale Verschiebung des Scherzapfens 3 bewirkt. Der Mechanismus zur Umwandlung der Drehbewegung in die Axialbewegung umfasst eine Umfangsnut 43 des Betätigungsbolzens 4 sowie ein in eine Querbohrung 33 des Scherzapfens 3 eingesetztes Sicherungselement 5. Das Sicherungselement 5 ist als ein Sicherungsstift ausgeführt, das eine axiale Relativbewegung blockiert, während eine relative Verdrehbarkeit zwischen dem Betätigungsbolzen 4 und dem Scherzapfen 3 zugelassen wird. Dadurch kann der Scherzapfen 3 zwischen einer oberen axialen Endstellung S1 und einer unteren axialen Endstellung S2 in axialer Richtung hin und her bewegt werden, während sich seine rotatorische Ausrichtung nicht ändert. Als Sicherungselement 5 könnte auch mindestens ein Sicherungsring vorgesehen sein. Der Scherzapfen 3 könnte beidseitig im Wesentlichen parallele Querbohrungen 33 aufweisen, in die jeweils ein Sicherungselement 5 eingesetzt ist. Diese Lösung zur axialen Verschiebung des Scherzapfens 3 erfordert nur einen geringen Platzbedarf und hat insbesondere eine kleine Bauhöhe oberhalb des Gehäuses 1.

Die Gehäuseoberfläche 15 bildet eine erste axiale Anschlagsfläche 16 für die obere Stirnfläche 34 des Scherzapfens 3 und definiert dadurch die obere axiale Endstellung S1 des Scherzapfens 3. die Gehäuseaußenfläche 14 bildet eine zweite axiale Anschlagsfläche 17 für die untere Auflagefläche 42 des Kopfabschnitt 40 des Betätigungsbolzens 4 und definiert dadurch die untere axiale Endstellung S2 des Scherzapfens 3. Um eine unbeabsichtigte Überlastung der axialen Verbindung zwischen dem Betätigungsbolzen 4 und dem Scherzapfen 3 durch axiale Verspannung, oder sogar die Lösung der axialen Sicherung, zu verhindern, ist der Gewindeabschnitt 44 ausreichend kurz bemessen, beispielsweise zwischen 2 und 5 mm. Wobei der gesamte Betätigungsbolzen 4 eine Länge von ungefähr 20 mm hat. Dadurch kommt der Gewindeabschnitt 44 in der oberen axialen Endstellung S1 außer Eingriff mit dem Gewinde 13. Die Überbeanspruchung des Sicherungselement 5 wird dadurch vermieden.

Durch das vorgegebene Rastmaß R der Lochschiene 200 ist der zur Verfügung stehende Bauraum für die Befestigungsvorrichtung 100 beschränkt. Während das Rastmaß R dem Abstand zwischen den Längsachsen B der beiden Scherzapfen 3 entspricht, beträgt der Abstand zwischen der Längsachse C des Verriegelungsbolzens 2 und einem Scherzapfen 3 ein halbes Rastmaß R/2. Damit die Befestigungsvorrichtung 100 eine bestimmte zulässige Last auf die Lochscheine 200 übertragen kann, müssen insbesondere der Verriegelungsbolzen 2 und der Scherzapfen 3 entsprechend ausreichend groß dimensioniert werden. Je größer der Querschnitte des Scherzapfens 3 und des Verriegelungsbolzens 2, insbesondere der Durchmesser des Gewindeabschnitts 22, gewählt wird, desto geringer ist die verbleibende Materialstärke des Gehäuses 1 im Gehäusewandbereich 18 zwischen der Führungsausnehmung 10 und der Gewindebohrung für den Verriegelungsbolzen 2. Indem sich der Scherzapfen 3 bei der Befestigungsvorrichtung 100 relativ zum Gehäuse 1 nicht verdreht, kann sein Querschnitt im Hinblick auf die strukturmechanische Festigkeit des Gehäuses 1 hin optimiert werden.

Gemäß dem Ausführungsbeispiel hat der Querschnitt des Scherzapfens 3 in einem ersten Außenkonturabschnitt 31 die erste Querschnittsabmessung d1 und in dem zweiten Außenkonturabschnitt 32 die kleinere zweite Querschnittsabmessung d2. Der zweite Außenkonturabschnitt 32, in dessen Bereich der Querschnitt reduziert ist, ist zum Verriegelungskopfabschnitt 20 hin ausgerichtet. Zwischen den beiden beidseitig ausgebildeten zweiten Außenkonturabschnitt 32 sind die ersten Außenkonturabschnitt der 31 angeordnet, die einem gedachten Kreisquerschnitt des Scherzapfens 3 entsprechen. Der erste Außenkonturabschnitt 31 entspricht einem nach außen gewölbten (konvexen) Kreisbogen, wobei der Durchmesser d1 beispielsweise ungefähr 18-19 mm beträgt. Der zweite Außenkonturabschnitt 32 entspricht einem nach innen gewölbten (konkaven) Kreisbogen, der beispielsweise einen Radius von 5-6 mm hat. Der Durchmesser d2 beträgt beispielsweise ungefähr 14 mm. Zwischen dem ersten Außenkonturabschnitt 31 und dem zweiten Außenkonturabschnitt 32 verläuft die Außenumfangsfläche 30 kontinuierlich, beispielsweise mit einem Übergangsradius von 3-4 mm. Die gesamte Querschnittsreduktion beträgt in diesem Ausführungsbeispiel mit beidseitiger Querschnittsverkleinerung durch Ausfräsung des Scherzapfens 3 im Bereich des zweiten Außenkonturabschnitt 32 ungefähr 4-6 mm. Der Gehäusewandbereich 18 kann dementsprechend um 2 bis 3 mm stärker, d. h. mit größerer Wanddicke ausgeführt sein, wodurch sich die Festigkeit des Gehäuses 1 ausreichend erhöht, um einen aus Stahl gefertigten Verriegelungsbolzen 2 sicher in das Gehäuse 1 einschrauben zu können. Der zweite Außenkonturabschnitt 32 und die Außenkontur des Gewindeabschnitts 22 des Verriegelungsbolzens 2 sind vorzugsweise im Wesentlichen konzentrisch zueinander ausgerichtet, so dass die Materialstärke im Gehäusewandbereich 18 symmetrisch über den zum Scherzapfen 3 hin ausgerichteten Winkelbereich des Gewindeabschnitts 22 (bezogen auf die Längsachse C) erreichbar ist.

Die in den Figuren 5 sowie 6a und 6b dargestellten Ausführungsformen von Befestigungsvorrichtungen 100 weisen jeweils Befestigungsklappelemente 6 auf, die auf- und abklappbare Riegel zur Befestigung von Containern und Paletten für Frachtgut auf einem Frachtdeck eines Flugzeugs darstellen. Damit die von Rollen getragenen Container und Paletten auf dem Frachtdeck - im noch nicht mit der Befestigungsvorrichtung 100 befestigten Zustand - ungehindert auf dem Frachtdeck bewegt werden können, darf eine zulässige Maximalhöhe, beispielsweise von 2 Zoll, der Befestigungsvorrichtung 100 im abgeklappten Zustand der Befestigungsklappelemente 6 nicht überschritten werden. Um die Befestigungsklappelement 6 möglichst flach in Richtung des Gehäuses 1 abklappen zu können, muss der Mechanismus zur axialen Verschiebung des Scherzapfens 3 eine möglichst geringe Bauhöhe aufweisen. Indem der Betätigungsbolzen 4 platzsparend als Schraubbolzen mit einem Kopfabschnitt 40 mit Mitnahmeprofil 41 gestaltet ist, steht der Betätigungsbolzen 4 nur relativ wenig über die Gehäuseoberfläche 15 vor und gewährleistet so die erforderliche geringe Bauhöhe.

Im Folgenden ist ein Montageverfahren zur lösbaren Verbindung der erfindungsgemäßen Befestigungseinrichtung 100 beschrieben. Zur lösbaren Verbindung einer Befestigungsvorrichtung 100 mit der Lochschiene 200 nach dem eingangs beschriebenen zweiten Verriegelungsprinzip wird die Befestigungsvorrichtung 100 von einer Ausgangsposition in eine Verriegelungsposition P verschoben. In der Verriegelungsposition P greifen die Schubzapfen 3 in die Schienenlöcher 201 ein, um eine Bewegung in der XY-Richtung zu blockieren, während der Verriegelungskopfabschnitt 20 die Profilkanten eines Schlitzabschnitts 203 hintergreift, um eine Bewegung in der Z-Richtung (in Figur 7b senkrecht zur Zeichenebene) zu verhindern. Hierzu wird die Befestigungsvorrichtung 100 in der Ausgangsposition, während sich der Scherzapfen 3 in der oberen axialen Endstellung S1 befindet, mit dem Verriegelungskopfabschnitt 20 des Verriegelungsbolzens 2 (Zugbolzen) zunächst in ein Schienenloch 201 eingeführt und dann um eine halbe Rasterlänge R, also typischerweise um ½ Zoll, in Längsrichtung X in die Verriegelungsposition P verschoben. Dann wird der Scherzapfen 3 durch Betätigung, nämlich Verdrehung, des Betätigungsbolzens 4 in die untere axiale Endstellung S2 bewegt, in der er formschlüssig in ein Schienenloch 201 eingreift.

Die erfindungsgemäße Befestigungsvorrichtung 100 erreicht mit konstruktiv einfachen Mitteln die Übertragung hoher Lasten und hat gleichzeitig einen geringen Platzbedarf, insbesondere eine geringe Bauhöhe.

### Bezuaszeichenliste:

- 1: Gehäuse
- 2: Verriegelungsbolzen
- 3: Scherzapfen
- 4: Betätigungsbolzen
- 5: Sicherungselement
- 6: Befestigungsklappelement
- 10: Führungsausnehmung
- 11: Innenkonturabschnitt
- 12: Durchgangsbohrung
- 13: Gewinde
- 14: Gehäuseaußenfläche
- 15: Gehäuseoberfläche
- 16: erste axiale Anschlagsfläche
- 17: zweite axiale Anschlagsfläche
- 18: Gehäusewandbereich
- 20: Verriegelungskopfabschnitt
- 21: Schaftabschnitt
- 22: Gewindeabschnitt
- 23: Mitnahmeprofil
- 30: Außenumfangsfläche
- 31: erster Außenkonturabschnitt
- 32: zweiter Außenkonturabschnitt
- 33: Querbohrung
- 34: obere Stirnfläche
- 40: Kopfabschnitt
- 41: Mitnahmeprofil
- 42: untere Auflagefläche
- 43: Umfangsnut
- 44: Gewindeabschnitt
- 100: Befestigungsvorrichtung
- 200: Lochschiene
- 201: Schienenloch
- 202: Schienenschlitz
- 203: Schlitzabschnitt
- 204: Trägerprofil
- d1: erste Querschnittsabmessung
- d2: zweite (kleinere) Querschnittsabmessung
- X: Längsrichtung der Lochschiene
- B: Längsachse des Scherzapfens und Betätigungsbolzens
- C: Längsachse des Verriegelungsbolzens
- R: Rastermaß
- P: Verriegelungsposition
- S1: obere axiale Endstellung des Scherzapfens
- S2: untere axiale Endstellung des Scherzapfens

## Patentansprüche

1. Befestigungsvorrichtung (100) zur lösbaren Verbindung mit einer Lochschiene (200), vorzugsweise Sitzschiene, eines Flugzeugs, wobei die Lochschiene (200) in Längsrichtung (X) in einem Rastermaß (R) voneinander beabstandete Schienenlöcher (201) aufweist, die durch Schienenschlitze (202) miteinander verbunden sind, wobei die Befestigungsvorrichtung (100) umfasst:
- ein Gehäuse (1) aus Aluminium,
- mindestens einen fest mit dem Gehäuse (1) verbundenen Verriegelungskopfabschnitt (20),
wobei der Verriegelungskopfabschnitt (20) in ein Schienenloch (201) der Lochschiene (200) einführbar und entlang der Längsrichtung (X) der Lochschiene (200) in eine Verriegelungsposition verschiebbar ist, in der der Verriegelungskopfabschnitt (20) mit einem Schlitzabschnitt (203) der Lochschiene (200), in dem sich ein Schienenschlitz (202) erstreckt, im Eingriff ist und
wobei der Verriegelungskopfabschnitt (20) ein Abschnitt eines im Gehäuse (1) befestigten Verriegelungsbolzens (2) aus Stahl ist;
- mindestens einen Scherzapfen (3), der unverdrehbar und axial verschieblich relativ zum Gehäuse (1) im Gehäuse (1) geführt ist,
wobei ein zum Verriegelungskopfabschnitt (20) ausgerichteter Außenkonturabschnitt (32) des Querschnitts des Scherzapfens (3) nach innen gekrümmt geformt ist und
wobei der Scherzapfen (3) in einer Verriegelungsposition (P) der Befestigungsvorrichtung (100) durch axiale Verschiebung mit einem Schienenloch (201) der Lochschiene (200) in Eingriff bringbar ist;
- einen Betätigungsbolzen (4), der derart relativ zum Gehäuse (1) drehbar angeordnet und mit dem Scherzapfen (3) verbunden ist, dass eine Verdrehung des Betätigungsbolzens (4) eine axiale Verschiebung des Scherzapfens (3) relativ zum Gehäuse (1) bewirkt.

2. Befestigungsvorrichtung (1) nach Anspruch 1,
**dadurch gekennzeichnet, dass** der Scherzapfen (3) in einer Führungsausnehmung (10) des Gehäuses (1) aufgenommen ist, wobei ein Innenkonturabschnitt (11) der Führungsausnehmung (10), an die Form eines Außenkonturabschnitts (31, 32) des Scherzapfens (3) angepasst ist.

3. Befestigungsvorrichtung (1) nach Anspruch 1 oder 2,
**dadurch gekennzeichnet, dass** der Querschnitt des Scherzapfens (3) in mindestens einem ersten Außenkonturabschnitt (31) eine erste Querschnittsabmessung (d1) und in mindestens einem zweiten Außenkonturabschnitt (32) eine zweite, kleinere Querschnittsabmessung (d2) aufweist, wobei der zweite Außenkonturabschnitt (32) zum Verriegelungskopfabschnitt (20) ausgerichtet ist.

4. Befestigungsvorrichtung (1) nach einem der vorherigen Ansprüche,
**dadurch gekennzeichnet, dass** der zweite Außenkonturabschnitt (32) des Querschnitts des Scherzapfens (3), vorzugsweise kreisbogenförmig, nach innen gekrümmt geformt ist, wobei insbesondere der erste Außenkonturabschnitt (31) des Querschnitts des Scherzapfens (3), vorzugsweise kreisbogenförmig, nach außen gekrümmt geformt ist.

5. Befestigungsvorrichtung (1) nach einem der vorherigen Ansprüche,
**dadurch gekennzeichnet, dass** der Verriegelungskopfabschnitt (20) ein Abschnitt eines entlang eines Gewindeabschnitts (22) in das Gehäuse (1) eingeschraubten Verriegelungsbolzens (2) ist.

6. Befestigungsvorrichtung (1) nach einem der vorherigen Ansprüche,
**dadurch gekennzeichnet, dass** ein zum Verriegelungskopfabschnitt (20) ausgerichteter Außenkonturabschnitt (32) des Querschnitts des Scherzapfens (3) und eine Außenkontur des Verriegelungskopfabschnitts (20), insbesondere eine Außenkontur des Gewindeabschnitts (22) des Verriegelungsbolzens (2), konzentrisch zueinander ausgebildet sind.

7. Befestigungsvorrichtung (1) nach einem der vorherigen Ansprüche,
**dadurch gekennzeichnet, dass** der Betätigungsbolzen (4) über ein Gewinde (13) drehbar in einer Durchgangsbohrung (12) des Gehäuses (1) aufgenommen ist, und/oder
dass der Betätigungsbolzen (4) in axialer Richtung (B), vorzugsweise formschlüssig, fest mit dem Scherzapfen (3) verbunden ist, wobei der Betätigungsbolzen (4) und der Scherzapfen (3) insbesondere durch ein Sicherungselement (5), vorzugsweise einen Sicherungsstift oder einen Sicherungsring, gegen axiale Relativverschiebung gesichert sind.

8. Befestigungsvorrichtung (1) nach einem der vorherigen Ansprüche,
**dadurch gekennzeichnet, dass** der Betätigungsbolzen (4) eine Umfangsnut (43) und der Scherzapfen (3) mindestens eine Querbohrung (33) aufweist, wobei ein Sicherungselement (5), vorzugsweise ein Sicherungsstift, in die Umfangsnut (43) und in die Querbohrung (33) eingreift.

9. Befestigungsvorrichtung (1) nach einem der vorherigen Ansprüche,
**dadurch gekennzeichnet, dass** eine Gehäuseoberfläche (15) des Gehäuses (1), eine erste axiale Anschlagsfläche (16) für eine obere Stirnfläche (34) des Scherzapfens (3) ausbildet, wobei ein Kontakt der ersten axialen Anschlagsfläche (16) und der oberen Stirnfläche (34) eine obere axiale Endstellung (S1) des Scherzapfens (3) definieren.

10. Befestigungsvorrichtung (1) nach einem der vorherigen Ansprüche,
**dadurch gekennzeichnet, dass** der Betätigungsbolzen (4) einen Kopfabschnitt (40) mit einem Mitnahmeprofil (41) zur Verdrehung des Betätigungsbolzens (4) aufweist.

11. Befestigungsvorrichtung (1) nach einem der vorherigen Ansprüche,
**dadurch gekennzeichnet, dass** eine Gehäuseaußenfläche (14) des Gehäuses (1) eine zweite axiale Anschlagsfläche (17) für eine untere Auflagefläche (42) des Kopfabschnitts (40) des Betätigungsbolzens (4) ausbildet, wobei ein Kontakt der zweiten axialen Anschlagsfläche (17) und der unteren Auflagefläche (42) eine untere axiale Endstellung (S2) des Scherzapfens (3) definieren.

12. Befestigungsvorrichtung (1) nach einem der vorherigen Ansprüche,
**dadurch gekennzeichnet, dass** ein Gewindeabschnitt (44) des Betätigungsbolzens (4) in einer unteren axialen Endstellung (S2) des Scherzapfens (3) mit dem Gewinde (13) des Gehäuses (1) in Eingriff ist und in einer oberen axialen Endstellung (S1) des Scherzapfens (3) nicht im Eingriff mit dem Gewinde (13) des Gehäuses (1) ist.

13. Befestigungsvorrichtung (1) nach einem der vorherigen Ansprüche,
**dadurch gekennzeichnet, dass** beidseitig des Verriegelungskopfabschnitts (20) jeweils ein Scherzapfen (3) vorgesehen ist, wobei die Längsachsen (B) der beiden Scherzapfen (3) um ein Rastmaß (R) der Lochschiene (200) voneinander beabstandet sind.

14. Befestigungsvorrichtung (1) nach einem der vorherigen Ansprüche,
**dadurch gekennzeichnet, dass** mindestens ein Befestigungsklappelement (6), insbesondere zur Fixierung von Frachtcontainern und/oder Frachtpaletten auf einem Frachtdeck eines Flugzeugs, auf- und abklappbar am Gehäuse (1) befestigt ist, wobei der Betätigungsbolzen (4) in einer abgeklappten Stellung des Befestigungsklappelements (6) zumindest teilweise unterhalb des Befestigungsklappelement (6) positioniert ist.

15. Montageverfahren zur lösbaren Verbindung einer Befestigungsvorrichtung (100) nach einem der Ansprüche 1 bis 14 mit einer Lochschiene (200), vorzugsweise Sitzschiene, eines Flugzeugs, wobei die Lochschiene (200) in Längsrichtung (X) in einem Rastermaß (R) voneinander beabstandete Schienenlöcher (201) aufweist, die durch Schienenschlitze (202) miteinander verbunden sind, wobei das Montageverfahren folgende Schritte umfasst:
- Einführen des Verriegelungskopfabschnitts (20) der Befestigungsvorrichtung (100) in ein Schienenloch (201) der Lochschiene (200);
- Verschieben der Befestigungsvorrichtung (100) um ein halbes Rastermaß (R) entlang der Längsrichtung (X) der Lochschiene (200) in eine Verriegelungsposition, in der der Verriegelungskopfabschnitt (20) mit einem Schlitzabschnitt (203) der Lochschiene (200) im Eingriff ist;
- Verdrehen des Betätigungsbolzens (4) relativ zum Gehäuse (1), vorzugsweise durch Eingreifen eines passenden Werkzeugs in ein Mitnahmeprofil (41) des Betätigungsbolzens (4), um den Scherzapfen (3) axial in eine untere axiale Endposition zu bewegen, in der der Scherzapfen (3) in ein Schienenloch (201) der Lochschiene (200) eingreift.

## Claims

1. A fastening device (100) for releasable connection to a perforated rail (200), preferably seat rail, of an aircraft, wherein the perforated rail (200) comprises rail holes (201) spaced apart from one another in the longitudinal direction (X) by a grid dimension (R) and connected to one another by rail slots (202), wherein the fastening device (100) comprises:
- a housing (1) made of aluminum,
- at least one locking head portion (20) fixedly connected to the housing (1),
wherein the locking head portion (20) is insertable into a rail hole (201) of the perforated rail (200) and displaceable along the longitudinal direction (X) of the perforated rail (200) to a locking position (P) in which the locking head portion (20) is engaged with a slot portion (203) of the perforated rail (200) in which a rail slot (202) extends and
wherein the locking head portion (20) is a portion of a steel locking pin (2) fixed in the housing (1);
- at least one shear pin (3), which is guided in the housing (1) so as to be non-rotatable and axially displaceable relative to the housing (1), wherein an outer contour portion (32) of the cross-section of the shear pin (3) is aligned with the locking head portion (20) being curved inwards and
wherein the shear pin (3) can be brought into engagement with a rail hole (201) of the perforated rail (200) in a locking position (P) of the fastening device (100) by axial displacement;
- an actuating pin (4), which is rotatably arranged relative to the housing (1) and connected to the shear pin (3) in such a way that a rotation of the actuating pin (4) causes an axial displacement of the shear pin (3) relative to the housing (1).

2. The fastening device (1) according to claim 1,
**characterized in that** the shear pin (3) is accommodated in a guide recess (10) of the housing (1), wherein an inner contour portion (11) of the guide recess (10) is adapted to the shape of an outer contour portion (31, 32) of the shear pin (3).

3. The fastening device (1) according to claim 1 or 2,
**characterized in that** the cross-section of the shear pin (3) has a first cross-sectional dimension (d1) in at least a first outer contour portion (31) and a second, smaller cross-sectional dimension (d2) in at least a second outer contour portion (32), wherein the second outer contour portion (32) is aligned with the locking head portion (20).

4. The fastening device (1) according to one of the preceding claims,
**characterized in that** the second outer contour portion (32) of the cross-section of the shear pin (3) is curved inwardly, preferably circular arc-shaped, wherein in particular the first outer contour portion (31) of the cross-section of the shear pin (3) is curved outwardly, preferably circular arc-shaped.

5. The fastening device (1) according to one of the preceding claims,
**characterized in that** the locking head portion (20) is a portion of a locking pin (2) screwed into the housing (1) along a threaded portion (22).

6. The fastening device (1) according to one of the preceding claims,
**characterized in that** an outer contour portion (32) of the cross-section of the shear pin (3) aligned with the locking head portion (20) and an outer contour of the locking head portion (20), in particular an outer contour of the threaded portion (22) of the locking pin (2), are formed concentrically with respect to each other.

7. The fastening device (1) according to one of the preceding claims,
**characterized in that** the actuating pin (4) is rotatably received in a through-hole (12) of the housing (1) via a thread (13),
and/or
**in that** the actuating pin (4) is firmly connected to the shear pin (3) in the axial direction (B), preferably in a form-fitting manner, wherein the actuating pin (4) and the shear pin (3) are secured against relative axial displacement in particular by a locking element (5), preferably a locking pin or a locking ring.

8. The fastening device (1) according to one of the preceding claims,
**characterized in that** the actuating pin (4) has a circumferential groove (43) and the shear pin (3) has at least one transverse bore (33), wherein a locking element (5), preferably a locking pin, engage in the circumferential groove (43) and in the transverse bore (33).

9. The fastening device (1) according to one of the preceding claims,
**characterized in that** a housing surface (15) of the housing (1) forms a first axial stop surface (16) for an upper end surface (34) of the shear pin (3), wherein contact of the first axial stop surface (16) and the upper end surface (34) define an upper axial end position (S1) of the shear pin (3).

10. The fastening device (1) according to one of the preceding claims,
**characterized in that** the actuating pin (4) has a head portion (40) with a driving profile (41) for rotating the actuating pin (4).

11. The fastening device (1) according to one of the preceding claims,
**characterized in that** a housing outer surface (14) of the housing (1) forms a second axial stop surface (17) for a lower bearing surface (42) of the head portion (40) of the actuating pin (4), wherein a contact of the second axial stop surface (17) and the lower bearing surface (42) define a lower axial end position (S2) of the shear pin (3).

12. The fastening device (1) according to one of the preceding claims,
**characterized in that** a threaded portion (44) of the actuating pin (4) is engaged with the thread (13) of the housing (1) in a lower axial end position (S2) of the shear pin (3) and is not engaged with the thread (13) of the housing (1) in an upper axial end position (S1) of the shear pin (3).

13. The fastening device (1) according to one of the preceding claims,
**characterized in that** a respective shear pin (3) is provided on both sides of the locking head portion (20), wherein the longitudinal axes (B) of the two shear pins (3) are spaced apart from one another by a grid dimension (R) of the perforated rail (200).

14. The fastening device (1) according to one of the preceding claims,
**characterized in that** at least one folding fastening element (6), in particular for fixing cargo containers and/or cargo pallets on a cargo deck of an aircraft, is fastened to the housing (1) such that it can be folded up and down, wherein the actuating pin (4) is positioned at least partially below the folding fastening element (6) in a folded-down position of the folding fastening element (6).

15. A method of assembly for releasably connecting a fastening device (100) according to one of claims 1 to 14 to a perforated rail (200), preferably a seat rail, of an aircraft, wherein the perforated rail (200) has rail holes (201) spaced apart from each other in the longitudinal direction (X) at a grid dimension (R) and connected to each other by rail slots (202), wherein the method of assembly comprises the steps of:
- inserting the locking head portion (20) of the fastening device (100) into a rail hole (201) of the perforated rail (200);
- displacing the fastening device (100) by half a grid dimension (R) along the longitudinal direction (X) of the perforated rail (200) to a locking position in which the locking head portion (20) is in engagement with a slot portion (203) of the perforated rail (200);
- rotating the actuating pin (4) relative to the housing (1), preferably by engaging a suitable tool in a driving profile (41) of the actuating pin (4), to move the shear pin (3) axially to a lower axial end position in which the shear pin (3) engages in a rail hole (201) of the perforated rail (200).

## Revendications

1. Dispositif de fixation (100) destiné à être assemblé d'une façon pouvant être défaite avec un rail perforé (200) d'un avion, de préférence un rail de sièges, lequel rail perforé (200) présente des trous de rail (201) écartés les uns des autres d'une cote d'écartement (R) dans le sens longitudinal (X) et reliés les uns aux autres par des fentes de rail (202), le dispositif de fixation (100) comprenant :
- un boîtier (1) en aluminium,
- au moins une partie formant tête de verrouillage (20) fixée au boîtier (1),
la partie formant tête de verrouillage (20) pouvant être insérée dans un trou de rail (201) du rail perforé (200) et déplacée dans le sens longitudinal (X) du rail perforé (200) dans une position de verrouillage, dans laquelle la partie formant tête de verrouillage (20) est engagée dans une partie fendue (203) du rail perforé (200) dans laquelle s'étend une fente de rail (202), et
la partie formant tête de verrouillage (20) étant une partie d'un boulon de verrouillage (2) en acier fixé dans le boîtier (1) ;
- au moins une goupille de cisaillement (3) incapable de rotation et capable de translation dans le sens axial par rapport au boîtier (1) qui est guidée dans le boîtier (1),
une partie de contour extérieur (32) de la section de la goupille de cisaillement (3) orientée vers la partie formant tête de verrouillage (20) étant incurvée vers l'intérieur, et
la goupille de cisaillement (3) pouvant être engagée dans un trou de rail (201) du rail perforé (200) dans une position de verrouillage (P) du dispositif de fixation (100) par une translation axiale ;
- un boulon d'actionnement (4) disposé avec possibilité de rotation par rapport au boîtier (1) et relié à la goupille de cisaillement (3) de telle manière qu'une rotation du boulon d'actionnement (4) réalise une translation axiale de la goupille de cisaillement (3) par rapport au boîtier (1).

2. Dispositif de fixation (1) selon la revendication 1, **caractérisé en ce que** la goupille de cisaillement (3) est logée dans un creux de guidage (10) du boîtier (1), une partie de contour intérieur (11) du creux de guidage (10) étant adaptée à la forme d'une partie de contour extérieur (31, 32) de la goupille de cisaillement (3).

3. Dispositif de fixation (1) selon la revendication 1 ou 2, **caractérisé en ce que** la section de la goupille de cisaillement (3) présente une première dimension en section (d1) dans au moins une première partie de contour extérieur (31) et une deuxième dimension en section (d2), plus petite, dans au moins une deuxième partie de contour extérieur (32), la deuxième partie de contour extérieur (32) étant orientée vers la partie formant tête de verrouillage (20).

4. Dispositif de fixation (1) selon l'une des revendications précédentes, **caractérisé en ce que** la deuxième partie de contour extérieur (32) de la section de la goupille de cisaillement (3) est courbée vers l'intérieur, de préférence en arc de cercle, la première partie de contour extérieur (31) de la section de la goupille de cisaillement (3), en particulier, étant courbée vers l'extérieur, de préférence en arc de cercle.

5. Dispositif de fixation (1) selon l'une des revendications précédentes, **caractérisé en ce que** la partie formant tête de verrouillage (20) est une partie d'un boulon de verrouillage (2) vissé dans le boîtier (1) le long d'une partie filetée (22).

6. Dispositif de fixation (1) selon l'une des revendications précédentes, **caractérisé en ce qu'**une partie de contour extérieur (32) de la section de la goupille de cisaillement (3) orientée vers la partie formant tête de verrouillage (20) et un contour extérieur de la partie formant tête de verrouillage (20), en particulier un contour extérieur de la partie filetée (22) du boulon de verrouillage (2), sont formées de façon concentrique l'une par rapport à l'autre.

7. Dispositif de fixation (1) selon l'une des revendications précédentes, **caractérisé en ce que** le boulon d'actionnement (4) est logé avec possibilité de rotation sur un filetage (13) dans un alésage traversant (12) du boîtier (1) et/ou
**en ce que** le boulon d'actionnement (4) est fixé dans le sens axial (B) à la goupille de cisaillement (3), de préférence par engagement positif, le boulon d'actionnement (4) et la goupille de cisaillement (3) étant en particulier assurés par un élément de sûreté (5), de préférence une goupille de sûreté ou un anneau de sûreté, pour empêcher leur translation axiale relative.

8. Dispositif de fixation (1) selon l'une des revendications précédentes, **caractérisé en ce que** le boulon d'actionnement (4) comporte une rainure périphérique (43) et la goupille de cisaillement (3) au moins un alésage transversal (33), un élément de sûreté (5), de préférence une goupille de sûreté, s'engageant dans la rainure périphérique (43) et dans l'alésage transversal (33).

9. Dispositif de fixation (1) selon l'une des revendications précédentes, **caractérisé en ce qu'**une surface de boîtier (15) du boîtier (1) forme une première surface de butée axiale (16) pour une face d'extrémité supérieure (34) de la goupille de cisaillement (3), un contact de la première surface de butée axiale (16) et de la face d'extrémité supérieure (34) définissant une position de fin de course axiale supérieure (S1) de la goupille de cisaillement (3).

10. Dispositif de fixation (1) selon l'une des revendications précédentes, **caractérisé en ce que** le boulon d'actionnement (4) comporte une partie de tête (40) avec un profil d'entraînement (41) pour faire tourner le boulon d'actionnement (4).

11. Dispositif de fixation (1) selon l'une des revendications précédentes, **caractérisé en ce qu'**une surface extérieure de boîtier (14) du boîtier (1) comporte une deuxième surface de butée axiale (17) pour une surface d'appui inférieure (42) de la partie de tête (40) du boulon d'actionnement (4), un contact entre la deuxième surface de butée axiale (17) et la surface d'appui inférieure (42) définissant une position de fin de course axiale inférieure (S2) de la goupille de cisaillement (3).

12. Dispositif de fixation (1) selon l'une des revendications précédentes, **caractérisé en ce qu'**une partie filetée (44) du boulon d'actionnement (4) est en prise avec le filetage (13) du boîtier (1) dans une position de fin de course axiale inférieure (S2) de la goupille de cisaillement (3) et n'est pas en prise avec le filetage (13) du boîtier (1) dans une position de fin de course axiale supérieure (S1) de la goupille de cisaillement (3).

13. Dispositif de fixation (1) selon l'une des revendications précédentes, **caractérisé en ce qu'**une goupille de cisaillement (3) est prévue de chaque côté de la partie formant tête de verrouillage (20), les axes longitudinaux (B) de deux goupilles de cisaillement (3) étant écartés l'un de l'autre d'une cote d'écartement (R) du rail perforé (200).

14. Dispositif de fixation (1) selon l'une des revendications précédentes, **caractérisé en ce qu'**au moins un élément formant clapet de fixation (6), en particulier pour la fixation de conteneurs de fret et/ou de palettes de fret sur un pont de chargement d'un avion, est fixé sur le boîtier (1) de façon à pouvoir être déployé et rabattu, le boulon d'actionnement (4) étant positionné au moins en partie en dessous de l'élément formant clapet de fixation (6) quand l'élément formant clapet de fixation (6) est en position rabattue.

15. Procédé de montage pour l'assemblage pouvant être défait d'un dispositif de fixation (100) selon l'une des revendications 1 à 14 avec un rail perforé (200) d'un avion, de préférence un rail de sièges, lequel rail perforé (200) présente des trous de rail (201) écartés les uns des autres d'une cote d'écartement (R) dans le sens longitudinal (X) et reliés les uns aux autres par des fentes de rail (202), le procédé de montage comprenant les étapes suivantes :
- insertion de la partie formant tête de verrouillage (20) du dispositif de fixation (100) dans un trou de rail (201) du rail perforé (200) ;
- translation du dispositif de fixation (100) d'une demi-cote d'écartement (R) dans le sens longitudinal (X) du rail perforé (200) jusqu'à une position de verrouillage dans laquelle la partie formant tête de verrouillage (20) est en prise avec une partie fendue (203) du rail perforé (200) ;
- rotation du boulon d'actionnement (4) par rapport au boîtier (1), de préférence par l'engagement d'un outil adéquat dans un profil d'entraînement (41) du boulon d'actionnement (4), de façon à déplacer la goupille de cisaillement (3) dans le sens axial dans une position de fin de course axiale inférieure dans laquelle la goupille de cisaillement (3) s'engage dans un trou de rail (201) du rail perforé (200).
